# EUROPEAN PATENT APPLICATION

(11) **EP 1 617 685 A2**
(43) Date of publication of application: **18.01.2006**
(21) Application number: 04030882.7
(22) Date of filing: 28.12.2004
(51) Int. Cl.: H04Q 1/02

(54) **Upgrading a telecommunication street cabinet**

(30) Priority: 15.07.2004 IL 16303904
(71) Applicant: ECI TELECOM LTD., Petach-Tikva 49517 (IL)
(72) Inventor: Shavit, Amir, Tel-Mond 40600 (IL); Savizky, Reuven, Hod-Hasharon 45265 (IL); Sabaz, Alon, Hagor 45870 (IL); Grinspun, Ariel, Kfar-Saba 44288 (IL); Mioduser, Gabriel Reuben, Gan-Yavne 70800 (IL); Gluch, Ariel, Beit-Shemesh 99547 (IL)
(74) Representative: Modiano, Micaela Nadia

(57) **Abstract**

An apparatus (10) and a method are provided to upgrade services provided to subscribers already through a street cabinet. The upgrading is achieved by externally connecting to the street cabinet a communication apparatus which comprises two units, the first (4), connected to the street cabinet, while the second (2), mountable onto the first unit, receives electric power from the first unit and is operative to exchange communication signals with the street cabinet via the first unit.

## Description

### FIELD OF THE INVENTION

The present invention generally relates to telecommunication systems, and more particularly to extensions to cabinets for telecommunication equipment.

### BACKGROUND OF THE INVENTION

Telecommunication cabinets are often used for housing terminating telecommunications cables, wiring etc. used for communications arriving from a central office, and to allow their distribution to the subscribers located at the vicinity (up to few kilometers) of the cabinet. They can either be cabinets that comprise active components using power conveyed to the cabinet, or simply passive cabinets which allow distribution of the arriving communication, e.g. in the form of copper distribution point, small cross-connecting boxes, etc. The operators may face problems when the cabinet capacity is not enough to cope with the subscribers' increasing demands for services. Other problems may arise if the cabinet does comprise active components and the subscribers wish to upgrade the services they receive, e.g. from voice only to DSL services. One method to ease that problem is by adding remote access multiplexers to the cabinet, such as the applicant's MiniRAM®, described in the applicant's web site www.ecitele.com/broadband, helps alleviating the need to build dedicated cabinets for the broadband type of communication. The MiniRAM®, having a compact and environmentally hardened design, may be installed inside or alongside existing cabinets in a ruggadized form factor.

However, one problem still left with such a ruggadized solution for outdoor cabinet, and particularly with a multiplexer that is comprised in a single compact hardened unit, is the maintenance problem. More particularly, when such a unit requires replacement, a technician must come over and have all the cables connecting between the cabinet (or the cross connect point) and the adjacent unit, redone.

### SUMMARY OF THE INVENTION

The present invention seeks to provide a solution of a device that allows fast and low cost deployment while ensuring simple replacement method.

Another object of the invention is to provide an improved apparatus for use as an extending device to a street cabinet.

It should be understood that the term "street cabinet" as used herein through the description and claims is used to encompass also passive copper cross connection and distribution point as well as street cabinet, pole mounted cabinet, wall mounted cabinet, etc., whether they are all passive or whether there is a demand to increase the amount of power supplied to that street cabinet.

Further objects and features of the invention will become apparent to those skilled in the art from the following description and the accompanying drawings.

Therefore, in accordance with an embodiment of the present invention, there is provided an apparatus for use in a telecommunication network and adapted to be externally associated with a street cabinet. The apparatus comprises:
a first unit operatively connected to the street cabinet via one or more communication cables and via one or more electrical cables; and
a second unit, adapted to receive electric power from the first unit and exchange communication signals with the street cabinet via the first unit,
and wherein the second unit is adapted to be mounted onto the first unit and be electrically and communicatingly associated therewith.

According to another embodiment of the invention, the first unit further comprises:
(a) a mounting portion for mounting the second unit;
(b) engaging means for engaging with the second unit mounted on said first unit; and
(c) engaging release means for releasing said second unit from an engaging with said engaging means.

In accordance with yet another preferred embodiment of the present invention, there is provided an apparatus for upgrading a passive communication devices, such as copper distribution points, small cross-connecting boxes, etc., or increasing the power that is currently provided thereto. Such an upgrade allows the service providers to offer their subscribers, e.g. those which have been receiving communications through, a passive device, more advanced services, where the provisioning of these more advanced services require a power source at the cabinet vicinity, or in other words, require supplying necessary power to active components for the provisioning of these new services.

Preferably, the apparatus comprises a docking unit and an active unit. More preferably, the docking unit comprises the plurality of the line pair terminations while the active unit comprises the electric power aggregator with or without at least one power-driven appliance. This at least one power-driven appliance is preferably operative to provide upgraded services to at least one subscriber operatively connected to street cabinet.

By another embodiment of the invention, the apparatus comprises:
a plurality of line pair terminations, terminating a corresponding plurality of telecommunication network line pairs, wherein the line pairs being operative to convey electric power supplied by a corresponding plurality of power sources (e.g. at the central office), and wherein this plurality of line pairs is preferably comprised in the first unit of the apparatus;
an electric power aggregator operative to aggregate the electric power supplied via the plurality of line pairs to provide electric power suitable for powering at least one power-driven appliance, and to control that the electric power supplied via each line pair of said plurality of line pairs does not exceed a pre-defined threshold, and wherein this electric power aggregator is preferably comprised in the second unit of the apparatus.

By yet another aspect of the invention there is provided a method for providing electrical power to a street cabinet, which comprises the steps of:
externally associating a first unit of a communication apparatus with a street cabinet, wherein the first unit is operatively connected to the street cabinet via one or more communication cables and via one or more electrical cables;
mounting a second unit belonging to that communication apparatus onto the first unit, wherein the second unit is adapted to receive electric power from the first unit and exchange communication signals with the street cabinet via the first unit.

According to another embodiment of this aspect of the invention, the method provided further comprises the steps of:
supplying electric power by a plurality of power sources located at a central office and conveying said electric power via a corresponding plurality of line pairs that are suitable for transmission of data in the telecommunication network;
varying the amount of power conveyed via the plurality of line pairs so that the electric power conveyed via each line pair of the plurality of line pairs does not exceed a pre-defined threshold;
aggregating the electric power supplied via the plurality of line pairs in a power aggregator located at the upgrading device, to provide electric power suitable for powering an appliance; and
providing the aggregated electric power to at least one power-driven appliance.

### BRIEF DESCRIPTION OF THE DRAWINGS

The present invention will be understood and appreciated more fully from the following detailed description, taken in conjunction with the drawings in which:
Fig. 1 is a schematic front view of an apparatus being constructed and operative in accordance with a preferred embodiment of the present invention; and
Fig. 2 is an isometric view of the apparatus illustrated in Fig. 1.

### DETAILED DESCRIPTION OF PREFERRED EMBODIMENTS

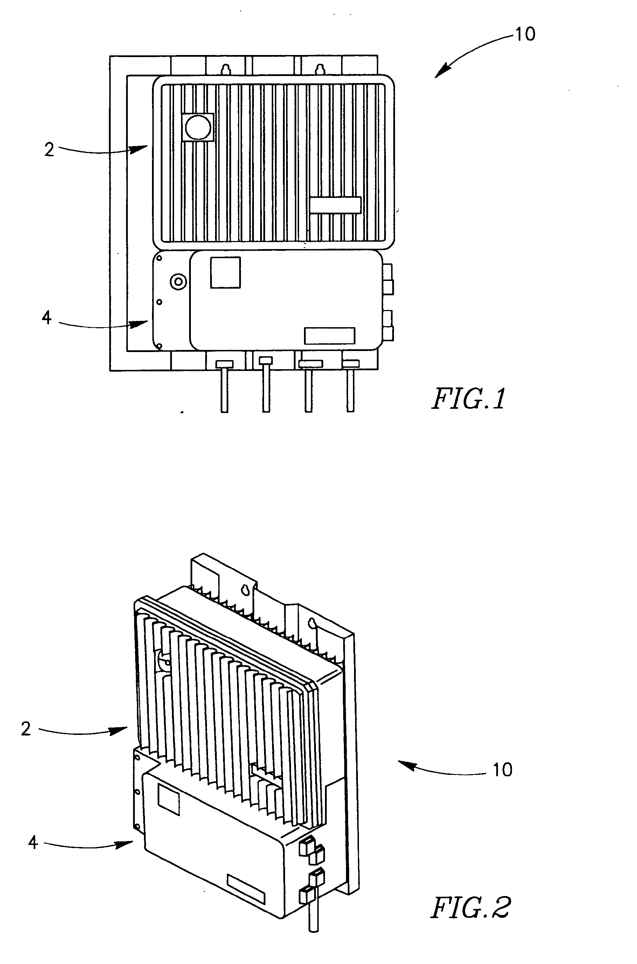

Reference is now made to Fig. 1 which is an example of a simplified illustration of a preferred implementation of apparatus 10 in accordance with the present invention.

As may be seen from Fig. 1, apparatus 10 is a compact unit, consisting of two sections 2 and 4, which when installed act as a single integral unit: an active unit 2 and a docking unit 4. The docking unit terminates the cable and houses standard primary protection modules, POTS splitters and secondary protection.

As previously explained, this architecture allows replacement of the active unit without effecting POTS services, and alleviates the need to redo cable work in the event of replacement of the active unit.

Preferably, when installed, the docking unit is attached first. The active unit is then placed onto the docking unit, preferably from the front. The connection between the two units can be made by any one of appropriate means known to those skilled in the art. One such example is by means of waterproof (IP67) D-Type connectors.

According to an embodiment of the invention, the first unit is already built in as an integral part of the street cabinet, whenever needed, the active unit (the second unit) can be mounted onto the street cabinet itself, thereby the street cabinet operates as a docking unit for said second unit.

By a preferred embodiment of the invention, guiding pins ensure proper insertion of the active unit onto the docking unit.

In accordance with the example demonstrated herein, the docking unit interfaces to the "outside world", comprise one or more of the following:
Fiber Termination;
Cable stubs open or connectorized, e.g.:
   Cables with POTS interface from Central Office or POTS Multiplexer (such as DLC);
   Cables with DATA (DSL) and optionally combined with POTS;
   Cables with Remote Line Powering Pairs;
   Cables with Input and Output alarms;
   Cables with local AC or DC power;
   Coaxial cables; and
   Fiber Optic transmission

The functionality provided by unit 4 of apparatus 10 (depending of course on the components comprised in that unit) is any of the following:
Cable termination;
Easy replacement of active unit 2;
Primary lightning protection;
Secondary protection;
Replaceable splitters;
Testing access.

The active unit of this example comprises waterproof connection and is adapted to handle one or more of the following signals and functions:
DSL Signals
Voice signals
Coaxial cable signals
Remote line powering pairs
AC or DC power
Input and Output alarms
Fiber Optic transmission
Line testing

Hence the functionality provided by active unit 2 is the following:
DSL connectivity
DSL data aggregation
High speed uplink Such as Optical Transmission

It is appreciated that various features of the invention that are, for clarity, described in the contexts of separate embodiments may also be provided in combination in a single embodiment. Conversely, various features of the invention which are, for brevity, described in the context of a single embodiment may also be provided separately or in any suitable sub-combination.

It will be appreciated by persons skilled in the art that the present invention is not limited by what has been particularly shown and described herein above. Rather the scope of the invention is defined by the claims that follow.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Apparatus for use in a telecommunication network and adapted to be externally associated with a street cabinet, wherein said apparatus comprising:
a first unit operatively connected to the street cabinet via one or more communication cables and via one or more electrical cables; and
a second unit, adapted to receive electric power from said first unit and exchange communication signals with said street cabinet via said first unit,
and wherein said first unit is adapted to receive said second unit when mounted thereon, and be electrically and communicatingly associated therewith.

2. Apparatus according to claim 1, wherein said first unit further comprises:
(a) a mounting portion for receiving said second unit;
(b) engaging means for engaging with said second unit when mounted on said first unit; and
(c) engaging release means for releasing said second unit from engaging with said engaging means.

3. Apparatus according to claim 1 or 2, wherein said one or more communication cables is a member from a group consisting of: a coax cable, a twisted pair wire, an optic fiber and any combination thereof.

4. Apparatus according to any one of claims 1 to 3, further comprising:
a plurality of line pair terminations, terminating a corresponding plurality of telecommunication network line pairs, wherein said line pairs being operative to convey electric power supplied by a corresponding plurality of power sources;
an electric power aggregator operative to aggregate the electric power supplied via the plurality of line pairs to provide electric power suitable for powering a power-driven appliance, and to control the electric power supplied via each line pair of said plurality of line pairs so that it does not exceed a pre-defined threshold.

5. An apparatus according to claim 4, and wherein said plurality of line pair terminations is comprised in said first unit and wherein said electric power aggregator is comprised in said second unit.

6. An apparatus according to claim 4 or 5, and wherein said at least one power-driven appliance is operative to provide upgraded services to at least one subscriber operatively connected to said street cabinet.

7. An apparatus according to claim 1, wherein said first unit is comprised as an integral part of said street cabinet so that said street cabinet is used as a docking unit for said second unit.

8. A method for providing electrical power to a street cabinet, which comprises the steps of:
externally associating a first unit of a communication apparatus with a street cabinet, wherein said first unit is operatively connected to said street cabinet via one or more communication cables and via one or more electrical cables;
mounting a second unit of said communication apparatus onto said first unit, wherein said second unit is adapted to receive electric power from said first unit and exchange communication signals with said street cabinet via said first unit.

9. A method according to claim 8, further comprising the steps of:
supplying electric power by a plurality of power sources located at a central office and conveying said electric power via a corresponding plurality of line pairs that are suitable for transmission of data in said telecommunication network;
varying the amount of power conveyed via said plurality of line pairs so that the electric power conveyed via each line pair of said plurality of line pairs does not exceed a pre-defined threshold;
aggregating the electric power supplied via the plurality of line pairs in a power aggregator located at said upgrading device, to provide electric power suitable for powering an appliance; and
providing said aggregated electric power to at least one power-driven appliance.
